Europäisches Patentamt

European Patent Office

Office européen des brevets

(19)

(11) Veröffentlichungsnummer: **0 286 699**
**B1**

(12) **EUROPÄISCHE PATENTSCHRIFT**

(45) Veröffentlichungstag der Patentschrift:
**27.06.90**

(21) Anmeldenummer: **87105410.2**

(22) Anmeldetag: **11.04.87**

(51) Int. Cl.⁵: **B01J 39/04**, B01J 49/00

(54) Verfahren zur Entfernung von Kationen einer Erdalkalimetall-Species aus wässrigen Lösungen mit Ionenaustauschermaterial.

(43) Veröffentlichungstag der Anmeldung:
**19.10.88 Patentblatt 88/42**

(45) Bekanntmachung des Hinweises auf die Patenterteilung:
**27.06.90 Patentblatt 90/26**

(84) Benannte Vertragsstaaten:
**AT BE CH DE FR GB LI NL**

(56) Entgegenhaltungen:
**DE-A- 2 714 297**
**FR-A- 2 413 325**
**US-A- 2 227 520**

(73) Patentinhaber: **KERNFORSCHUNGSZENTRUM KARLSRUHE GMBH, Weberstrasse 5 Postfach 3640, D-7500 Karlsruhe 1(DE)**

(72) Erfinder: **Höll, Wolfgang, Dr., Am Horbach 9, D-7505 Ettlingen(DE)**
Erfinder: **Eberle, Siegfried, Prof. Dr., Luisenstrasse 13, D-7514 Eggenstein(DE)**
Erfinder: **Horst, Jörgen, Eichelgasse 3, D-7500 Karlsruhe 41(DE)**

## Beschreibung

Die Erfindung betrifft ein Verfahren zur Entfernung von Kationen einer Erdalkalimetall-Species aus wäßrigen Lösungen mit Ionenaustauschermaterial, das aus einem Kationenaustauscher besteht oder einen solchen enthält, der zuvor mit Kationen einer anderen Erdalkalimetall-Species zumindest zum Teil beladen wurde, ud bei dem der mit der zu entfernenden Species beladene oder erschöpfte Kationen-Austauscher regeneriert wird.

Ein solches Verfahren ist aus der FR-A 2 413 325 bekannt. Hier werden Calciumionen gegen Magnesiumionen ausgetauscht. Die Regeneration des beladenen Ionenaustauschers wird mit Magnesiumchlorid durchgeführt.

Der Erfindung liegt daher die Aufgabe zugrunde, ein Ionenaustausch-Verfahren zur selektiven Entfernung einer Erdalkalimetall-Species aus mehrere Erdalkalimetall-Species enthaltenden wäßrigen Lösungen und ein Verfahren zur Regenerierung des Ionenaustausches zu schaffen, bei dem die Nachteile des Standes der Technik vermieden werden.

Die Aufgabe wird erfindungsgemäß dadurch gelöst, daß zur Regeneration der mit der zu entfernenden Species beladene oder erschöpfte Kationen-Austauscher mit einer wäßrigen Suspension schwerlöslicher Carbonate und/oder Hydroxide der anderen Erdalkalimetall-Species in Kontakt gebracht wird und in die Suspension $CO_2$-haltiges Gas eingeleitet wird.

Vorteilhafterweise umfaßt die Regeneration sowohl die Elution der zu entfernenden Erdalkalimetall-Species als auch die Konditionierung des freien Austauschers mit der anderen Erdalkalimetall-Species in die wiederverwendbare Form und wird in einem einzigen Verfahrensschritt durchgeführt. Der $CO_2$-Partialdruck in der Suspension liegt während des Einleitens des $CO_2$-haltigen Gases zwischen 0,1 und 10 bar.

Mit dem erfindungsgemäßen Verfahren sind sowohl Calcium-Ionen mit einem Kationenaustauscher in Magnesium-Form als auch Magnesium-Ionen mit einem Calcium beladenen Austauscher aus wäßrigen Lösungen entfernbar.

Im folgenden wird anhand der Beschreibung eines Durchführungsbeispiels und einer Figur das erfindungsgemäße Verfahren näher erläutert.

<u>Durchführungsbeispiel:</u>

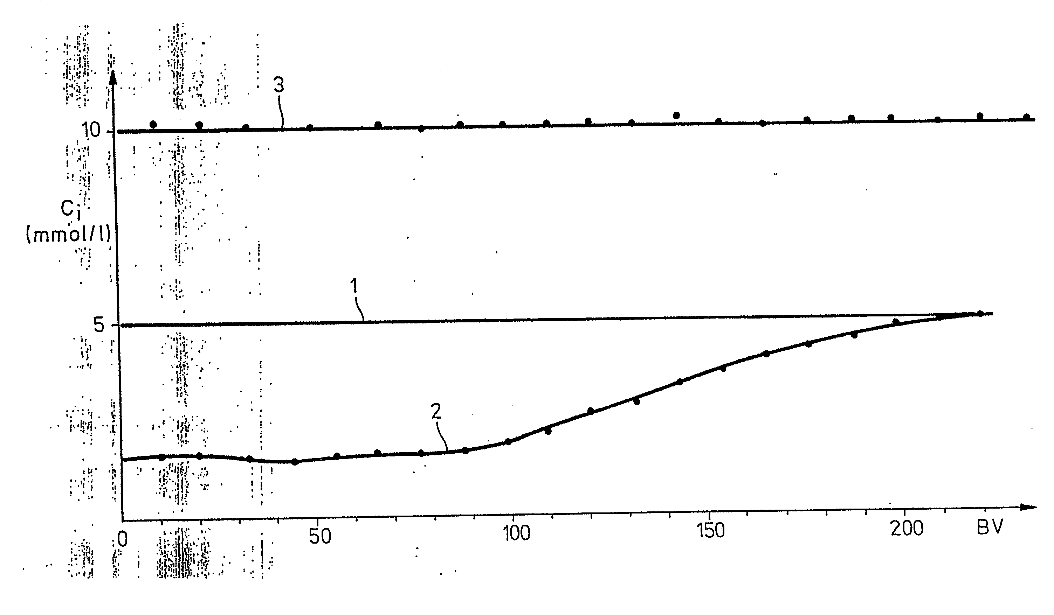

Aus einer als Rohwasser dienenden Modellösung mit jeweils 5 mmol/l Calcium-Ionen und Magnesium-Ionen wurde Calcium mit Hilfe eines handelsüblichen, stark sauren Kationen-Austauschers (mit Handelsbezeichnung Amberlite® IR-120) in Magnesium-Form selektiv entfernt. Die Einsatzmenge des Kationenaustauschers betrug 900 ml. Vor dem Einsatz des Ionenaustauschers war dieser mit 5 Bettvolumina einer 1%igen $Mg(OH)_2$-Suspension regeneriert worden, wobei die Suspension mit $CO_2$ bei einem Partialdruck von 6 bar gesättigt worden war. Die Calcium-Entfernungswirkung ist aus der Figur zu ersehen. Kurve 1 zeigt die Konzentration an Calcium-Ionen bzw. an Magnesium-Ionen im Rohwasser an. Kurve 2 ist die sogenannte Durchbruchskurve für die Calcium-Ionen, aus der zu erkennen ist, daß der Durchbruch der Calcium-Ionen in das Produktwasser bei etwa 90 Bettvolumina (BV) Durchsatz beginnt. Bei ca. 220 Bettvolumina Durchsatz findet kein Austausch mehr statt. Das Produktwasser enthält immer die gleiche Summe Calcium- + Magnesium-Ionen (Kurve 3). Bis zu etwa 90 Bettvolumina sind im Produktwasser nur noch ca. 1,5 mmol/l $Ca^{2+}$ vorhanden. Die Magnesium-Konzentration beträgt dabei etwa 8,5 mmol/l. Das Beispiel wurde mit einem Durchsatz an Rohwasser von 10 l/Stunde (= ca. 11 Bettvolumina/Stunde) durchgeführt. Das Ergebnis zeigt, daß Calcium-Ionen mit dem erfindungsgemäßen Verfahren in erheblichem Umfang aus einem Rohwasser entfernt werden können.

## Patentansprüche

1. Verfahren zur Entfernung von Kationen einer Erdalkalimetall-Species aus wäßrigen Lösungen mit Ionenaustauschmaterial, bei dem das Ionenaustauschmaterial aus einem Kationenaustauscher besteht oder einen solchen enthält, der zuvor mit Kationen einer anderen Erdalkalimetall-Species zumindest zum Teil beladen wurde, und bei dem der mit der zu entfernenden Species beladene oder erschöpfte Kationen-Austauscher regeneriert wird, dadurch gekennzeichnet, daß zur Regeneration der mit der zu entfernenden Species beladene oder erschöpfte Kationenaustauscher entweder allein oder im Gemisch mit einem Anionenaustauscher mit einer wäßrigen Suspension schwerlöslicher Carbonate und/oder Hydroxide der anderen Erdalkalimetall-Species in Kontakt gebracht wird und in die Suspension $CO_2$-haltiges Gas eingeleitet wird.

2. Verfahren nach Anspruch 1, dadurch gekennzeichnet, daß die Regeneration sowohl die Elution der zu entfernenden Erdalkalimetall-Species als auch die Konditionierung des freien Austauschers mit der anderen Erdalkalimetall-Species in die wiederverwendbare Form umfaßt und in einem einzigen Verfahrensschritt durchgeführt wird.

3. Verfahren nach Anspruch 1, dadurch gekennzeichnet, daß der $CO_2$-Partialdruck in der Suspension während des Einleitens des $CO_2$-haltigen Gases zwischen 0,1 und 10 bar liegt.

## Claims

1. Process for the removal of cations of an alkaline-earth metal species from aqueous solutions by means of an ion exchange material, wherein the ion exchange material is formed from a cation exchanger or contains a cation exchanger which has been charged beforehand, at least partially, with cations of a different alkaline-earth metal species, and wherein the cation exchanger, which is charged with the species to be removed or is depleted thereof, is regenerated, characterised in that, for the regeneration, the cation exchanger, which is charged with the species to be removed or is depleted thereof, is brought into contact, either on its own or in combination with an anion exchanger, with an aqueous suspension of difficultly soluble carbonates and/or hydroxides of the other alkaline-earth metal species, and $CO_2$-containing gas is introduced into the suspension.

2. Process according to claim 1, characterised in that the regeneration includes both the elution of the alkaline-earth metal species to be removed and the conditioning of the free exchanger with the other alkaline-earth metal species into the re-usable form and is effected in one single operational step.

3. Process according to claim 1, characterised in that the $CO_2$ partial pressure in the suspension during the introduction of the $CO_2$-containing gas lies between 0.1 and 10 bars.

**Revendications**

1. Procédé pour éliminer des cations d'un métal alcalino-terreux d'une espèce de solutions aqueuses, à l'aide d'un échangeur d'ions, dans lequel l'échangeur d'ions est constitué d'un échangeur cationique ou contient un produit analogue, et a été chargé au préalable de cations d'un métal alcalino-terreux d'une autre espèce, au moins partiellement, et dans lequel l'échangeur cationique épuisé ou chargé en l'espèce à éliminer est régénéré, caractérisé en ce que pour régénérer l'échangeur cationique épuisé ou chargé en l'espèce à éliminer on le met en contact, soit seul, soit mélangé à un échangeur anionique, avec une suspension aqueuse d'hydroxydes et/ou de carbonates peu solubles de métal alcalino-terreux de l'autre espèce, et on introduit dans la suspension du gaz contenant du $CO_2$.

2. Procédé selon la revendication 1, caractérisé en ce que la régénération comprend l'élution du métal alcalino-terreux de l'espèce à éliminer ainsi que la charge de l'échangeur libre avec le métal alcalino-terreux de l'autre espèce pour le transférer sous une forme à nouveau utilisable, et est réalisée en une seule étape de procédé.

3. Procédé selon la revendication 1, caractérisé en ce que la pression partielle de $CO_2$ dans la suspension pendant l'introduction du gaz contenant du $CO_2$ se situe entre 0,1 et 10 bars.

EP 0 286 699 B1